# EUROPÄISCHE PATENTANMELDUNG

(11) **EP 4 656 354 A1**
(43) Veröffentlichungstag der Anmeldung: **03.12.2025**
(21) Anmeldenummer: 25179248.7
(22) Anmeldetag: 28.05.2025
(51) Int. Cl.: B29C 49/12, B29C 49/66, B29C 49/06, B29C 49/58, B29C 49/64, B29K 67/00, B29L 31/00

(54) **VERFAHREN ZUM BLASFORMEN VON BEHÄLTERN IN EINER STRECKBLASMASCHINE**

(30) Priorität: 31.05.2024 DE 102024115254
(71) Anmelder: KHS GmbH, 44143 Dortmund (DE)
(72) Erfinder: Baumgarte, Rolf, 44143 Dortmund (DE); Klöpper, Gerhard, 44143 Dortmund (DE); Lewin, Frank, 44143 Dortmund (DE); Matthiesen, Martin, 44143 Dortmund (DE); Kiefer, Margit, 44143 Dortmund (DE)
(74) Vertreter: Andrejewski - Honke Patent- und Rechtsanwälte Partnerschaft mbB

(57) **Zusammenfassung**

Verfahren zum Blasformen von Behältern (5) in einer Streckblasmaschine, wobei ein als Vorformling ausgebildeter Behälter (5) in eine Blasform (1) eingesetzt und anschließend während des Blasprozesses durch Verfahren einer zumindest einen Fluidauslass (12) aufweisenden Reckstange (9) entlang der Behälterachse innerhalb des Behälters (5) gereckt und der Behälter (5) durch Beaufschlagen mit einem Blasfluid ausgeformt wird. Erfindungsgemäß wird nach dem Ausformen des Behälters (5) die Innenwandung des Behälters (5) zumindest zum Kühlen eines Kopfbereiches (16) mit einem Spülfluid aus dem zumindest einen Fluidauslass (12) der Reckstange (9) beaufschlagt wird.

## Beschreibung

Die vorliegende Erfindung betrifft ein Verfahren zum Blasformen von Behältern in einer Streckblasmaschine, wobei ein als Vorformling ausgebildeter Behälter in eine Blasform eingesetzt und anschließend während des Blasprozesses durch Verfahren einer zumindest ein Fluidauslass aufweisenden Reckstange entlang der Behälterachse innerhalb des Behälters gereckt und der Behälter durch Beaufschlagen mit einem gasförmigen Blasfluid ausgeformt wird.

Insbesondere bezieht sich die Erfindung auf Streckblasmaschinen, welche im Bereich die Getränkeindustrie eingesetzt werden, sodass dann entsprechend aus den Vorformlingen Getränkebehälter, insbesondere Getränkeflaschen, gebildet werden.

Die Blasform besteht üblicherweise aus zwei Blasformteilen, welche zueinander verschwenkbar eingerichtet sind und eine gemeinsame Blaskavität ausbilden. In diese Blaskavität wird dann der Vorformling in einem Öffnungszustand der Blasform eingesetzt und die Blasform sodann durch Verschwenken der Blasformteile zueinander geschlossen. In dem Schließzustand erfolgt der eigentliche Blasprozess. Hierzu wird ein Blasfluid über eine zugeordnete Blaseinheit in den Vorformling eingebracht, wodurch dieser an die Blaskavität herangerückt wird und sich plastisch verformt. Die Blaskavität was hierbei eine Form auf, die der Form des fertigen Behälters entspricht. Somit ist es erforderlich, dass für jeden Behältertyp eine entsprechende Blasform aus zumindest zwei Blasformteilen bereitgestellt wird.

Bei dem Blasfluid handelt es sich um ein gasförmiges Fluid, z. B. um Druckluft. Es ist aus der Praxis allerdings auch bekannt, ein flüssiges Blasfluid zum Blasformen der Behälter einzusetzen. In diesem Fall handelt es sich dann üblicherweise um ein Fluid, welches ohnehin in dem fertigen Behälter angeordnet werden soll. Entsprechend wird durch Einbringen des Blasfluids nicht nur der Behälter ausgebildet sondern zugleich auch befüllt. Bei dem Blasfluid handelt es sich dann bevorzugt um ein flüssiges Lebensmittel, z. B. um ein Getränk. Ein solches Verfahren wird auch als Form-Fill-Verfahren bezeichnet.

Die Behälter bestehen bevorzugt aus einem thermoplastischen Kunststoff, z. B. Polyethylenterephthalat (PET). Entsprechend werden die Behälter üblicherweise vor dem Einbringen in die Blasform erwärmt, wodurch das Material aufweicht und sich somit in einfacher Art und Weise verformen lässt.

Um insbesondere entlang der Behälterachse eine Reckung des Vorformlings zu bewirken, ist bei einer Streckblasmaschine zusätzlich eine Reckstange vorgesehen, welche entlang der Behälterachse in den Vorformling eingeführt und verfahren wird. Über diese Reckstange wird eine axiale Längung des Vorformlings bewirkt. Darüber hinaus ist es aus der Praxis auch bekannt, dass die Reckstange hohl ausgebildet ist und zumindest einen Fluidauslass aufweist, welcher dann üblicherweise in einer Mantelfläche der Reckstange angeordnet ist. Über die Reckstange ist es dann möglich, zusätzlich zu der Blaseinheit ein Blasfluid in die Behälter einzubringen, sodass entsprechend die Ausformung des Behälters auch durch das durch die Reckstange eingebrachte Blasfluid bewirkt wird.

Gemäß der üblichen Ausgestaltung von Vorformlingen, weisen die entsprechenden Behälter einen bereits fertig ausgebildeten Mündungsabschnitt mit einem Außengewinde zur Aufnahme einer Verschlusskappe sowie einen darunter angeordneten Neckring auf, wobei dieser Neckring radial gegenüber dem Außengewinde vorsteht. Im Zuge des Blasprozesses wird der Behälter unterhalb des Neckrings radial aufgeweitet, wobei sich insbesondere im unmittelbar an den Neckring angrenzenden Kopfbereich vergleichsweise geringe Verstreckungen ergeben. Entsprechend ist dort die Materialstärke der Behälterwandung dicker als in einem darunter angeordneten Körperabschnitt des Behälters. Durch die Verstreckung ergeben sich aber nicht nur geringere Materialstärken. vielmehr wird das Material auch orientiert. Durch die niedrige Verstreckung im Kopfbereich erfolgt dort allerdings nur eine sehr geringe Orientierung des Materials. Dies hat zur Folge, dass bei einem anschließenden Befüllen der Behälter mit einem heißen Füllmedium das Material im Kopfbereich in ihren ursprünglichen Zustand zurückgehen kann, wodurch sich der Behälter verformt. Dieser Effekt wird gemeinhin auch als Memory-Effekt bezeichnet.

Um dies zu vermeiden, ist es aus der Praxis bekannt, dass die Blasform bzw. die Blasformteile im Bereich des Kopfabschnittes von außen gekühlt werden. Durch das Kühlen ist es möglich, das Material auch bei niedrigen Verstreckungen zu orientieren, um hierdurch den Memory Effekt zu verhindern.

Wenngleich sich dieses Vorgehen in der Praxis grundsätzlich bewährt hat, so erfordert dies eine relativ aufwendige Ausgestaltung der Blasform. Zugleich werden die Vorformlinge ausschließlich von außen gekühlt, wobei aber aufgrund der hohen Materialstärke eine Kühlung des gesamten Kopfabschnittes vergleichsweise träge ist.

Entsprechend liegt der Erfindung die Aufgabe zugrunde, eine energie- und kosteneffiziente Kühlung des Kopfabschnittes zu gewährleisten.

Gegenstand und Lösung dieser Aufgabe ist ein Verfahren gemäß Patentanspruch 1. Dementsprechend ist vorgesehen, dass nach dem Ausformen des Behälters die Innenwandung des Behälters zumindest zum Kühlen eines Kopfbereiches mit einem Spülfluid aus dem zumindest einen Fluidauslass der Reckstange beaufschlagt wird.

Erfindungsgemäß wird demnach die Reckstange dazu verwendet, um über den zumindest einen Fluidauslass ein Spülfluid auf die Innenwandung des Kopfbereiches des Behälters zu leiten. Hierdurch wird der Kopfbereich von Innen gekühlt, sodass der zuvor erwähnte Memory Effekt verhindert werden kann. Selbstverständlich ist es auch möglich, dass zumindest während des Kühlens zusätzlich eine aktive Kühlung der Außenwandung des Behälters im Kopfbereich erfolgt.

Der zumindest eine Fluidauslass steht mit einem Fluidkanal innerhalb der Reckstange in Wirkverbindung. Entsprechend ist die Reckstange als hohle Reckstange ausgebildet, wobei der Fluidkanal der Reckstange dazu dient, ein Spülfluid aufzunehmen, über welches dann die Kühlung des Kopfbereiches erfolgen kann. Der zumindest eine Fluidauslass ist bevorzugt in einer Mantelfläche der Reckstange angeordnet. Darüber hinaus sind bevorzugt zumindest zwei, besonders bevorzugt zumindest vier Fluidauslässe vorgesehen, welche in einen gemeinsamen Fluidkanal der Reckstange übergehen.

Um das Spülfluid besonders effektiv auf den Kopfbereich der Behälter leiten zu können, kommen grundsätzlich verschiedene Anordnungsmöglichkeiten für die Fluidauslässe der Reckstange in Betracht, welche alternativ oder aber auch ergänzend eingesetzt werden können. Entscheidend ist hier, dass während des Kühlens der zumindest eine Fluidauslass bevorzugt im Kopfbereich des Behälters angeordnet ist.

Der Kopfbereich definiert sich hierbei ausgehend von einem oberen Rand der Blasform. Der obere Rand der Blasform ist hierbei derart ausgebildet, dass der Behälter mit dem Neckring auf dem oberen Rand der Blasform aufliegt. Entsprechend erstreckt sich dann ausgehend von dem oberen Rand der Behälterkörper nach unten hin zu einem unteren Rand, wobei der Kopfbereich im Wesentlichen als Behälterhals mit zunehmenden Behälterdurchmesser definiert wird.

Da gerade dieser Bereich besonders wesentlich für die Kühlung ist, ist gemäß einer bevorzugten Ausgestaltung vorgesehen, dass der zumindest eine Fluidauslass in einem Abstand zu einem oberen Ende der Blasform angeordnet ist, wobei der Abstand zwischen 0 und 50 mm beträgt. Bevorzugt beträgt der Abstand zwischen 5 und 20 mm. Hierbei versteht sich, dass sich auf eine vertikale Richtung bezogen wird. Diese vertikale Richtung verläuft ausgehend von dem oberen Rand hin zum unteren Rand, wobei auch die Reckstange üblicherweise entlang dieser vertikalen Richtung verfahrbar eingerichtet ist. Die vertikale Richtung fällt darüber hinaus üblicherweise auch mit der Behälterachse zusammen, wobei je nach Ausgestaltung der Behälter die Behälterachse im Wesentlichen eine Rotationsachse des Behälters darstellt.

Um den zumindest einen Fluidauslass im Bereich des Kopfbereiches anzuordnen, kann die Reckstange vor dem Kühlen bzw. nach dem Ausformen ausgehend von einer unteren Endlage in eine Zwischenlage überführt werden. Hierbei ist zu beachten, dass üblicherweise während des Blasprozesses zunächst die Reckstange in vertikaler Richtung in den Behälter eingeführt wird und so lange in den Behälter eintaucht, bis die untere Endlage erreicht ist. Diese untere Endlage ist üblicherweise dann erreicht, wenn die Reckstange in einem geringen Abstand zum Boden der Blasform angeordnet ist. Bevorzugt beträgt dann der Abstand zwischen der Bodenform und der Reckstange zwischen 2 und 6 mm.

Ausgehend von dieser unteren Endlage wird dann in aus der Praxis bekannten Blasprozessen die Reckstange zurück in die obere Endlage überführt, damit der ausgeformte Behälter entnommen werden kann. Das erfindungsgemäße Verfahren sieht nunmehr vor, dass zunächst die Reckstange in eine Zwischenlage überführt wird, welche entsprechend zwischen der oberen und der unteren Endlage angeordnet ist. Dieser Zwischenhub kann erforderlich sein, um die Fluidauslässe im Kopfbereich anzuordnen.

Ausgehend von einer solchen Ausgestaltung kann dann der zumisst eine Fluidauslass in einem unteren Abschnitt der Reckstange angeordnet sein, wobei sich der unter Abschnitt ausgehend von einem unteren Ende der Reckstange über maximal die Hälfte der in der unteren Endlage in der im Behälter angeordneten Länge der Reckstange entspricht. Entsprechend sind die Fluidauslässe in der unteren Endlage zu weit vom Kopfbereich entfernt, um dort einen Kühleffekt zu erzielen. Durch das Einbeziehen eines Zwischenschritte zwischen dem Ausformen und dem Kühlen, bei dem die Reckstange in die Zwischenlage überführt wird, kann dann der zumindest eine Fluidauslass dazu verwendet werden, um den Kopfbereich zu kühlen.

Gemäß einer bevorzugten Ausgestaltung ist darüber hinaus vorgesehen, dass sich der untere Abschnitt ausgehend von dem unteren Ende der Reckstange über maximal ein Drittel, besonders bevorzugt maximal ein Viertel der in der unteren Endlage in dem Behälter angeordneten Länge der Reckstange entspricht.

Besonders bevorzugt sind die Fluidauslässe zwischen 3 und 350 mm vom unteren Ende der Reckstange beabstandet. Darüber hinaus beträgt der Abstand des unteren Endes der Reckstange zwischen der unteren Endlage und der Zwischenlage zwischen 3 und 350 mm.

Gemäß einer alternativen Ausgestaltung des Verfahrens, kann die Reckstange während dem Kühlen und bzw. nach dem Ausformen in der unteren Endlage gehalten werden. Entsprechend wird die Reckstange nicht in eine Zwischenlage überführt.

Eine solche Ausgestaltung ist insbesondere dann sinnvoll, wenn der zumindest eine Fluidauslass in einem oberen Abschnitt der Reckstange angeordnet ist, wobei sich der obere Abschnitt ausgehend von einem oberen Ende der Blasform über maximal die Hälfte der in der unteren Endlage der Behälter angeordneten Länge der Reckstange entspricht. Hierbei beträgt der Abstand zwischen dem oberen Ende und dem zumindest ein Fluidauslass in der unteren Endlage der Reckstange bevorzugt maximal ein Drittel, besonders bevorzugt maximal ein Viertel, der in der Blasform angeordneten Länge der Reckstange.

Unabhängig von der Art und Weise, wie die Fluidauslässe in der Reckstange angeordnet sind bzw. wie die Reckstange vor dem Kühlen innerhalb der Blasform angeordnet wird, sieht eine bevorzugte Ausgestaltung vor, dass zum Ausformen das Blasfluid ein Druck innerhalb des Behälters erzeugt. Dieser Druck wird im Weiteren auch als Blasdruck bezeichnet, wobei dieser Blasdruck ausreichend groß sein muss, um das Material des Behälters plastisch verformen zu können. Vor und/oder während des Kühlens wird dann der Druck innerhalb des Behälters abgesenkt und ist entsprechend geringer als der Druck während des Ausformens bzw. als der Blasdruck. Eine solche Verfahrensführung hat hierbei den Vorteil, dass insbesondere als Blasfluid und Spülfluid dasselbe Medium verwendet werden kann.

Die Ausgestaltung des Fluidauslasses bzw. der Fluidauslässe ist grundsätzlich in verschiedener Art und Weise möglich. Im einfachsten Fall handelt es sich um Bohrungen in der Wandung der hohlen Reckstange, so dass der zumindest eine Fluidauslass einen kreisrunden Querschnitt aufweist. Der zumindest eine Fluidauslass kann aber auch schlitzförmig ausgebildet sein, wobei dieser dann bevorzugt eine größere in vertikaler Richtung verlaufende Länge als Breite aufweist. Bevorzugt beträgt das Verhältnis zumindest 2:1. Eine Sonderform hiervon sind sogenannte Luftklingen. Bei einer solchen Ausgestaltung ist das Verhältnis zwischen Länge und Breite so bemessen, dass sich eine durch den Fluidauslass nach außen gerichtete laminare Spülfluidströmung ergibt. Ferner sind auch Ausgestaltungen möglich, bei denen der zumindest eine Fluidauslass derart ausgebildet ist, dass sich eine tangentiale nach außen gerichtete Spülfluidströmung ergibt. Darüber hinaus kann die Reckstange bzw. der Fluidkanal auch als Wirbelrohrkammer ausgebildet sein. In diesem Fall strömt das Spülfluid tangential in den Fluidkanal ein, wobei das Spülfluid durch die starke Rotationsbewegung infolge der Reibung an der Kanalwandung erwärmt wird. In Folge dessen bildet sich ein in eine erste Richtung innerhalb des Fluidkanals strömende heiße Strömung und eine entgegengesetzte kalte Strömung aus, wobei die kalte Spülluftströmung über einen stirnseitig angeordneten Fluidauslass aus der Reckstange austritt.

Darüber hinaus kann der zumindest eine Fluidkanal der Reckstange an eine Spülfluidversorgung anschließen. Diese kann wiederum an eine Fluidpumpe angeschlossen sein, welche insbesondere auch die Blasfluidversorgung mit einem Blasfluid versorgt. Gemäß einer solchen Ausgestaltung schließen die Spülfluidversorgung und die Blasfluidversorgung an eine gemeinsame Fluidpumpe an. Gemäß einer solchen Ausgestaltung weist das Spülfluid zumindest zeitweise einen Druck auf, welcher dem Druck des Blasfluids entspricht. Entsprechend wird auch das Spülfluid mit einem Blasdruck über die Reckstange in den Behälter eingebracht, wobei sich durch die vorherige Druckentlastung innerhalb des Behälters ein Luftstrom ausbilden kann, welcher aktiv die Innenwandung des Behälters im Kopfbereich kühlt. Der Druck innerhalb des Behälters kann hierbei vollständig auf Atmosphärendruck (1 atm) herab gesenkt werden. Ein solcher Schritt ist ohnehin notwendig, damit der Behälter anschließend aus der Blasform entnommen werden kann. Eine solche Herabsenkung des Drucks auf Atmosphärenniveau wird auch als Entlastungsschritt bezeichnet. Entsprechend erfolgt das Kühlen der Behälter vor oder während des Entlastungsschrittes.

Da gemäß einer solchen Ausgestaltung sowohl das Spülfluid als auch das Blasfluid einen identischen Druck aufweisen, kommen als Blasfluid und Spülfluid auch dieselben Medien in Betracht. Insbesondere handelt es sich dann bei dem Blasfluid und/oder dem Spülfluid um Druckluft.

Gemäß einer bevorzugten Weiterbildung der Erfindung wird das Blasfluid während und/oder nach dem Ausformen gespeichert und das Spülfluid zumindest teilweise aus dem gespeicherten Blasfluid gebildet. Gemäß einer solchen Ausgestaltung wird also entsprechend ein Teil des Blasfluids recycelt, um im Nachgang als Spülfluid verwendet zu werden. Entsprechend bieten sich mehrere alternative Ausgestaltungen als Verfahrensführung an.

Gemäß einer ersten Variante wird das Blasfluid dadurch gespeichert, dass das Blasfluid zumindest während Ausformens über den Fluidauslass in den zumindest einen Fluidkanal einströmt. Durch Absenken des Drucks innerhalb des Behälters kann das Blasfluid als Spülfluid wieder über den Fluidauslass ausgetragen werden und den Behälter kühlen. Zur Vergrößerung des Speichervolumens kann darüber hinaus ein Speichertank an den Fluidkanal anschließen. Unabhängig davon ist aber keine separate Spülfluidversorgung vorgesehen. Eine solche Ausgestaltung erfordert ferner kein Spülfluidventil, da allein die Druckunterschiede zwischen dem Fluidkanal und dem Behälter eine Strömung bewirken.

Gemäß einer zweiten Variante wird nach dem Anordnen der Reckstange zum Kühlen der Behältermündung das Entlastungsventil für den Behälter geöffnet und zugleich das Spülfluidventil, mit welchem der Fluidkanal an eine Spülfluidversorgung anschließt, geöffnet. Das Spülfluid kann dann einen Blasdruck aufweisen und strömt gerichtet über die Reckstange aus dem zumindest einen Fluidauslass, um den Kopfbereich unterhalb des Neckrings zu kühlen. Sodann wird das Spülfluidventil geschlossen und der Behälter restlos entlastet. Im Anschluss kann dann auch das Entlastungsventil geschlossen werden. Das Kühlen ist damit beendet.

Gemäß einer dritten Variante wird nach dem Anordnen der Reckstange bzw. des zumindest einen Fluidauslasses zunächst ein Spülfluidventil geöffnet, welches mit einem Speichertank in Wirkverbindung steht. In diesem Speichertank liegt dann das gespeicherte Blasfluid vor, wobei der Druck des gespeicherten Blasfluids geringer ist als der Blasdruck. Im Wesentlichen beträgt der Druck zwischen 40 und 60 % des Blasdrucks. Mit Öffnen des Spülfluidventils wird der Speichertank gespannt bzw. geht der Blasdruck aus dem Behälter über die Reckstange in den Speichertank über, sodass nunmehr sämtliche Komponenten miteinander wirkverbunden den Blasdruck aufweisen. Sodann wird ein Recyclingventil geöffnet und das Blasfluid sowie das Spülfluid strömen aus dem Behälter heraus, wobei auch eine Kühlung des Kopfbereiches erfolgt. Das herausfließende Blasfluid und Spülfluid wird erneut gespeichert, wobei der Druck innerhalb des Systems üblicherweise auf den ursprünglichen Druck im Speichertank herabfällt. Sobald entsprechend 40 bis 60 % des Blasdruckes erreicht sind, ist der erste Spülzyklus abgeschlossen. Im Anschluss an den ersten Spülzyklus wird dann in einem zweiten Spül-Zyklus das Recyclingventil geschlossen und das Entlastungsventil geöffnet, wobei dann durch den zusätzlichen Druckabfall auf Atmosphärendruck eine erneute Strömung einsetzt, welche den Kopfbereich kühlt.

Gemäß einer bevorzugten Weiterbildung der Erfindung wird nach dem Kühlen die Reckstange in die obere Endlage überführt und der ausgeformte Behälter entnommen. Sodann kann erneut ein weiterer Behälter in die Blasform eingesetzt werden.

Gegenstand der Erfindung ist ferner eine Streckblasmaschine gemäß Patentanspruch 11 zur Durchführung des erfindungsgemäßen Verfahrens mit zumindest einer Blasform und einer der Blasform zugeordneten Blaseinheit zum Einbringen eines Blasfluids in die Behälter, wobei zusätzlich eine innerhalb der Blasform verfahrbare Reckstange zum Recken der Behälter vorgesehen ist, welche zumindest einen über einen Fluidauslass nach außen hin offenen Fluidkanal aufweist.

Grundsätzlich können hierbei sämtliche Merkmale, welche die Streckblasmaschine betreffen und im Zusammenhang mit dem Verfahren erläutert wurden auch für die Streckblasmaschine selbst übernommen werden.

Die Streckblasmaschine weist bevorzugt eine Antriebseinrichtung auf, welche an die Reckstange angeschlossen ist. Über diese Antriebseinrichtung ist es entsprechend möglich, die Reckstange entlang der Behälterachse bzw. entlang der vertikalen Richtung zwischen einer oberen und unteren Endlage zu verfahren.

Darüber hinaus kann die Reckstange über ein schaltbares Spülfluidventil mit einer Spülfluidversorgung in Wirkverbindung gebracht werden kann, wobei die Spülfluidversorgung bevorzugt an eine Fluidpumpe anschließt.

Bevorzugt kann auch die Blaseinheit über ein schaltbares Blasfluidventil mit einer Blasfluidversorgung in Wirkverbindung gebracht werden. Die Blasfluidversorgung und die Spülfluidversorgung können hierbei an eine gemeinsame Fluidpumpe anschließen.

Alternativ bildet der zumindest eine Fluidkanal der Reckstange eine Speichereinheit zur Speicherung eines Spülfluids oder ist Teil einer Speichereinheit ist, welche ausschließlich über den zumindest einen Fluidauslass nach außen hin offen ist. Entsprechend dient der Fluidkanal ausschließlich zur Speicherung der Spülfluids, so dass eine separate Spülfluidversorgung nicht mit der Reckstange wirkverbunden ist. Grundsätzlich ist es dann nicht erforderlich ein schaltbares Spülfluidventil vorzusehen.

Gemäß einer bevorzugten Weiterbildung der Erfindung weist die Spülfluidversorgung einen Speichertank auf, welcher fluidwirkend mit der Reckstange verbunden werden kann. Dieser Speichertank kann dann gemeinsam mit dem Fluidkanal zumindest teilweise die Speichereinheit bilden. Auch bei Einbindung eines Speichertanks ist ein Spülfluidventil nicht zwingend erforderlich. Sofern ein Spülfluidventil jedoch eingebunden wird, ist dieses bevorzugt zwischen der Reckstange bzw. dem Fluidkanal und dem Speichertank angeordnet.

Dieser Speichertank kann darüber hinaus aber auch über eine Recyclingleitung mit einer Abluftleitung der Blaseinheit fluidwirkend verbunden werden. Entsprechend ist es möglich, über die Abluftleitung das genutzte Blasfluid in dem Speichertank zu speichern, wobei dann das gespeicherte Blasfluid als Spülfluid genutzt werden kann.

Eine bevorzugte Weiterbildung der Erfindung sieht ferner vor, dass eine Steuerungsvorrichtung zumindest mit der Antriebseinrichtung und/oder dem Spülfluidventil verbunden ist. Hierunter ist in diesem Zusammenhang eine signalwirkende Verbindung zu verstehen. Dies kann beispielsweise kabellos oder aber auch kabelgebunden erfolgen.

Entsprechend ist es möglich, über die Steuervorrichtung das Spülfluidventil zu steuern. Selbstverständlich ist es ferner möglich, dass auch die Steuerungsvorrichtung mit dem Blasfluidventil sowie mit weiteren Ventilen verbunden ist, sodass über die Steuervorrichtung möglichst umfassend der Prozess gesteuert werden kann. Insbesondere ist aber die Steuervorrichtung dazu eingerichtet, zum Kühlen des Kopfbereichs der Behälter das Spülfluidventil zu steuern.

Die Steuerungsvorrichtung kann entsprechend auch signalwirkend mit der Antriebseinrichtung verbunden sein, wobei die Steuerungseinrichtung dazu eingerichtet ist, die Reckstange zum Kühlen des Behälters in die Zwischenlage zu überführen.

Im Folgenden wird die Erfindung anhand von Ausführungsbeispielen erläutert. Es zeigen:
- Fig. 1: eine Streckblasmaschine gemäß einer Ausführungsform während des Blasprozesses
- Fig. 2: die Streckblasmaschine gemäß der Figur 1 während des Kühlens
- Fig. 3,4,5: eine Streckblasmaschine gemäß einer weiteren Ausführungsform während des Kühlens
- Fig. 6: eine Streckblasmaschine gemäß einer weiteren Ausführungsform während des Kühlens

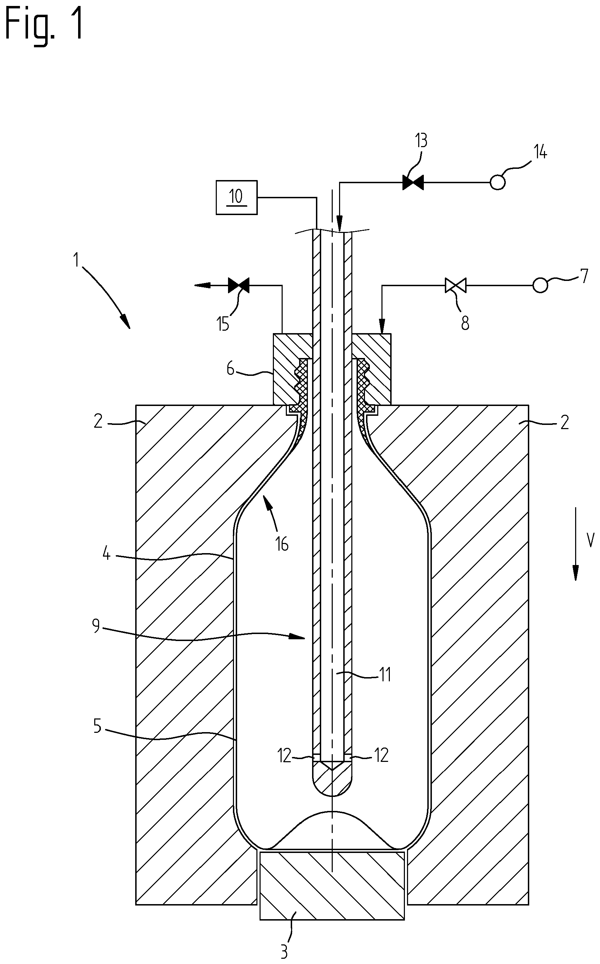

Die Figur 1 zeigt eine Streckblasmaschine in einer schematischen Darstellung mit einer Blasform 1, welche aus Blasformteilen 2 sowie einem Bodenteil 3 gebildet ist und welche gemeinsam eine Blaskavität 4 bildet, in welcher ein Behälter 5 in Form eines Vorformlings eingesetzt und durch Streckblasformen zu einem Getränkebehälter ausgebildet wird.

Zum Ausformen des Behälters 5 ist eine Blaseinheit 6 vorgesehen, über welche ein Blasfluid in den Behälter 5 eingebracht werden kann und wobei durch Ausübung eines Blasdruckes eine plastische Verformung des Behälters 5 erfolgt. Hierbei wird die Außenwandung des Behälters 5 an die Blaskavität 4 herangerückt. Die Blaskavität 4 weist entsprechend die Form des auszuformenden Behälters 5 auf.

Um ein Blasfluid in den Behälter 5 einbringen zu können, ist die Blaseinheit 6 mit einer Blasfluidversorgung 7 verbindbar. Hierzu ist ferner ein Blasfluidventil 8 vorgesehen, welches schaltbar ausgebildet ist. In diesem Zusammenhang ist anzumerken, dass sämtliche dunkel dargestellte Ventile ein geschlossenes Ventil darstellen, wobei hell dargestellte Ventile für ein geöffnetes Ventil stehen.

Gemäß der Figur 1 ist das Blasfluidventil 8 geöffnet, sodass das Blasfluid aus der Blasfluidversorgung 7 über die Behältermündung in den Behälter 5 hineinströmen kann. Als Blasfluid ist in diesem Zusammenhang Druckluft vorgesehen. Dieses kann über eine separate Fluidpumpe bereitgestellt werden.

Um den Behälter 5 darüber hinaus entlang der vertikalen Richtung V recken zu können, ist ferner eine Reckstange 9 vorgesehen, welche über eine separate Antriebseinrichtung 10 antreibbar ist. Diese Reckstange 9 ist innen hohl ausgebildet und weist einen Fluidkanal 11 auf, welcher endseitig in nach außen hin offene Fluidauslässe 12 übergeht. Entsprechend ist es möglich, über den Fluidkanal 11 ein Fluid durch die Fluidauslässe 12 in den Behälter 5 zu leiten. Der Fluidkanal 11 ist über ein Spülfluidventil 13 mit einer Spülfluidversorgung 14 verbindbar.

Gemäß der Figur 1 sind während des Blasprozesses sowohl das Spülfluidventil 13 als auch ein Entlastungsventil 15 geschlossen. Über das Entlastungsventil 15 ist es möglich, den Druck innerhalb des Behälters 5 auf Atmosphärenniveau zu senken.

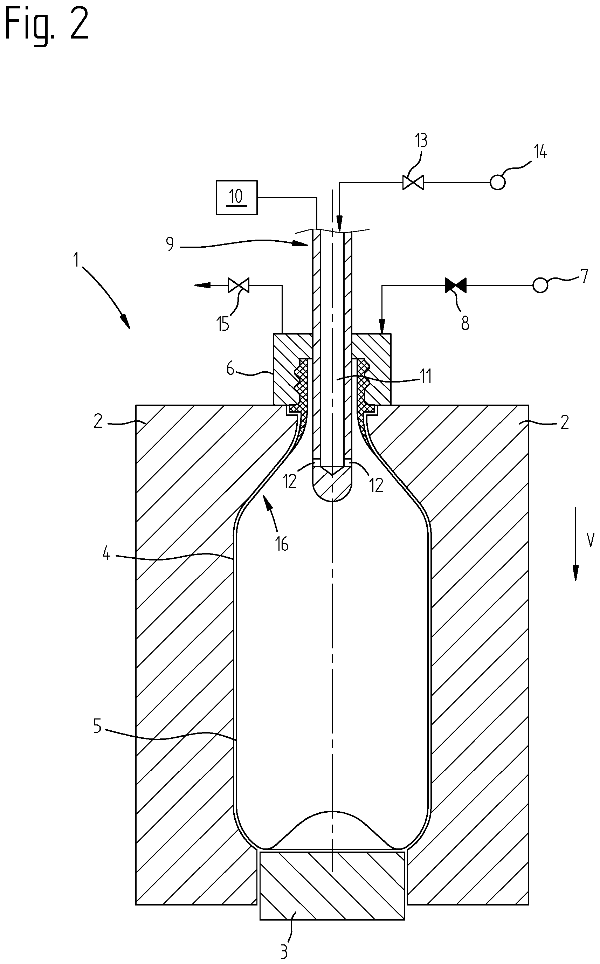

Nach Abschluss des Blasprozesses wird gemäß der Figur 2 einerseits das Blasfluidventil 8 geschlossen und das Spülfluidventil 13 geöffnet. Entsprechend gelangt nunmehr ein Spülfluid in den Fluidkanal 11 der Reckstange. Durch Öffnen des Entlastungsventils 15 ergibt sich eine Strömung, wobei durch ein Verfahren der Reckstange entgegen der vertikalen Richtung V die Fluidauslässe 12 in einem Kopfbereich 16 des Behälters angeordnet werden, sodass entsprechend durch das strömende Spülfluid eine Kühlung des Kopfbereichs 16 des Behälters 5 bewirkt wird. Um eine entsprechende Anordnung zu ermöglichen, wird die Reckstange 9 ausgehend von den in der Figur 1 dargestellten unteren Endlage in eine Zwischenlage überführt, bei der die Fluidauslässe 12 in dem entsprechenden Kopfbereich 16 angeordnet sind. Für eine Entnahme des Behälters 5 wird dann die Reckstange 9 in eine nicht dargestellte obere Endlage verfahren, sodass der Behälter in einfacher Art und Weise aus der Blaskavität 4 entnommen werden kann.

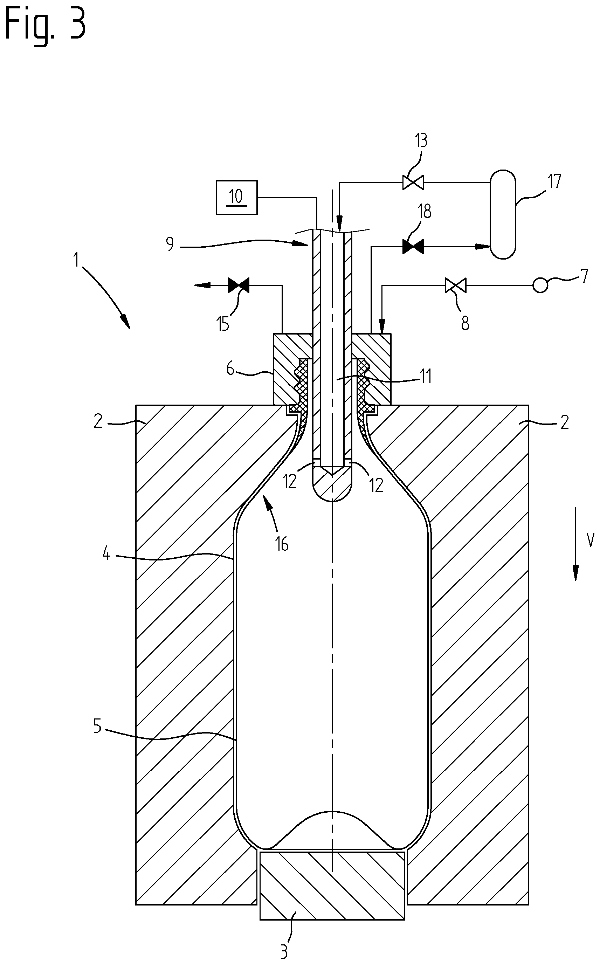

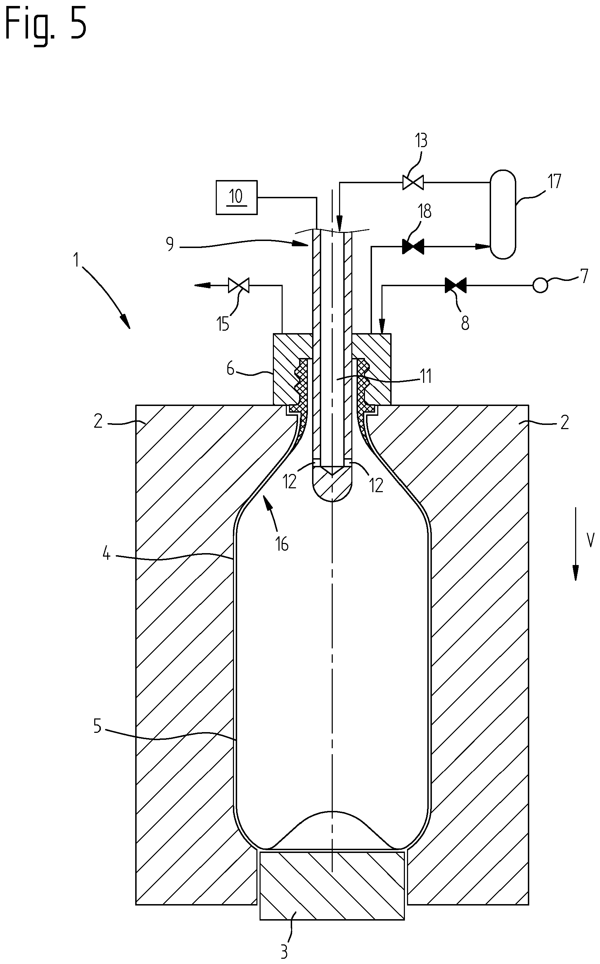

Die Figuren 3, 4, 5 zeigen die erfindungsgemäße Streckblasmaschine in einer zweiten Ausgestaltungsform. Gemäß der Figur 3 wird hierbei bei geschlossenem Entlastungsventil 15 und geöffneten Blasfluidventil 8 zunächst das Spülfluidventil 13 geöffnet, welches mit einem Speichertank 17 in Wirkverbindung steht.

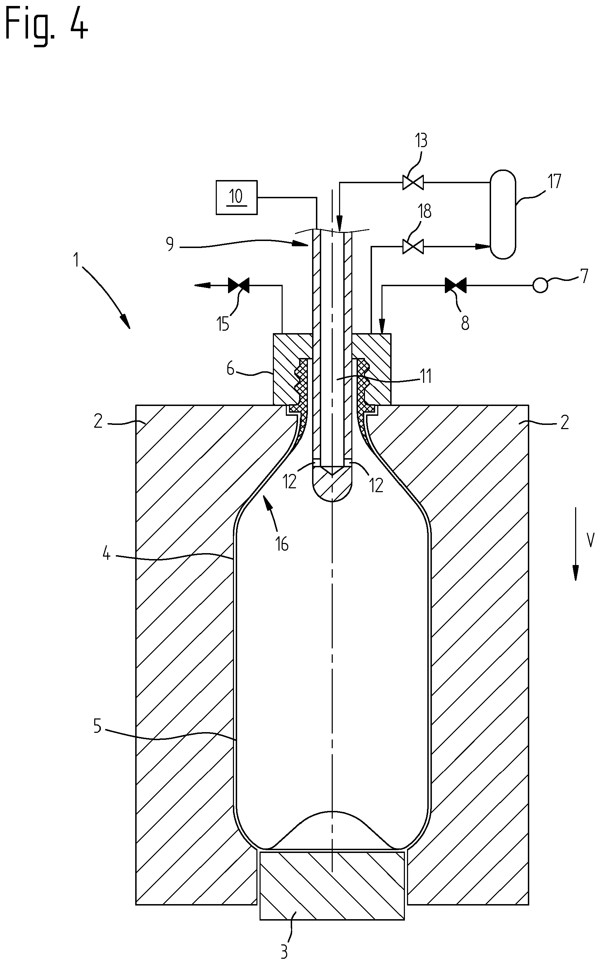

Sodann wird gemäß der Figur 4 das Blasfluidventil 8 geschlossen und zugleich ein Recyclingventil 18 geöffnet. Durch das Öffnen des Recyclingventils 18 fällt der Druck im Speichertank 17 im Wesentlichen auf 40 bis 60 % des Blasdrucks ab, wobei im Zuge dessen eine Strömung aus den Fluidauslässen 12 bewirkt wird. Entsprechend ergibt sich ein erster Spülzyklus, in dem der Kopfbereich 16 des Behälters 5 gekühlt wird. Sobald der Druck im Speichertank 17 soweit herab gesenkt ist, dass keine weitere Spülung mehr möglich ist, wird das Recyclingventil 18 geschlossen und zugleich das Entlastungsventil 15 geöffnet. In der Folge erfolgt eine Entlastung auf den Atmosphärendruck, wodurch eine weitere Strömung einsetzt, sodass sich ein zweiter Spülzyklus einstellt. Auch in der zweiten Ausgestaltungsform ist hierbei die Reckstange 9 auf einen Zwischenhub gefahren worden. Alternativ ist es selbstverständlich auch möglich, sämtliche Ausgestaltungsformen mit einer Reckstange 9 zu betreiben, bei der die Fluidauslässe 12 bereits in der unteren Endlage in der Höhe des Kopfbereichs angeordnet sind.

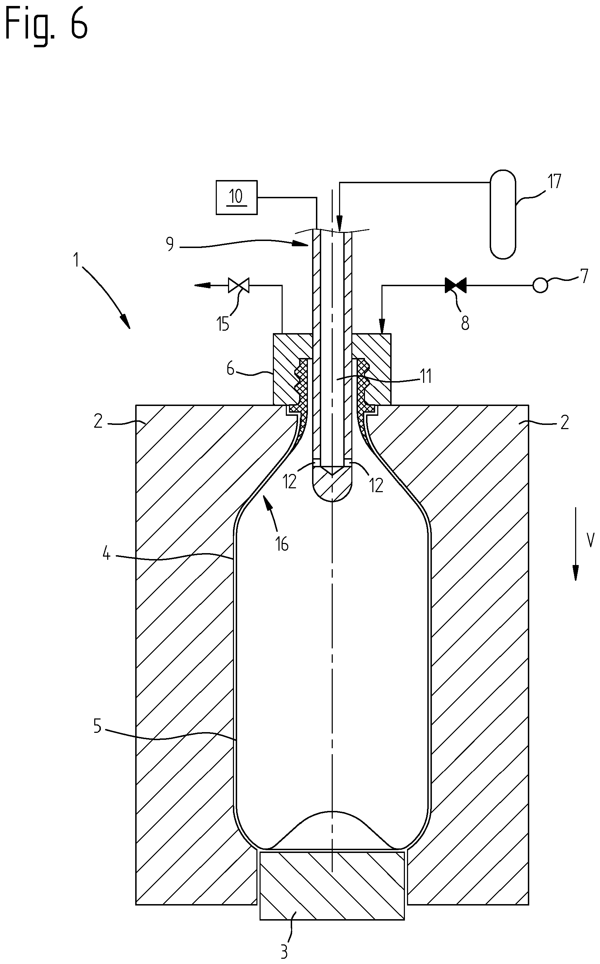

Die Fig. 6 zeigt eine weitere Ausgestaltung, welche ohne Spülfluidventil 13 und Spülfluidversorgung 14 auskommt. Hierbei bildet der Fluidkanal 11 zusammen mit dem Speichertank 17 sowie der dazwischen angeordneten Fluidleitung eine Speichereinheit, welche während des Ausformens über die Fluidauslässe 12 mit Blasfluid gefüllt wird. Im Anschluss daran wird das Blasfluidventil 8 geschlossen und das Entlastungsventil 15 geöffnet, so dass der Druck innerhalb des Behälters 5 absinkt und das gespeicherte Blasfluid als Spülfluid aus den Fluidauslässen 12 austritt. Der Speichertank 17 dient hierbei als Volumenvergrößerung der Speichereinheit. Grundsätzlich kann es auch ausreichen, wenn die Speichereinheit ausschließlich aus dem Fluidkanal 11 gebildet wird.

### Bezugszeichenliste:

- 1: Blasform
- 2: Blasformteil
- 3: Bodenteil
- 4: Blaskavität
- 5: Behälter
- 6: Blaseinheit
- 7: Blasfluidversorgung
- 8: Blasfluidventil
- 9: Reckstange
- 10: Antriebseinrichtung
- 11: Fluidkanal
- 12: Fluidauslässe
- 13: Spülfluidventil
- 14: Spülfluidversorgung
- 15: Entlastungsventil
- 16: Kopfbereich
- 17: Speichertank
- 18: Recyclingventil
- V: vertikale Richtung

## Patentansprüche

1. Verfahren zum Blasformen von Behältern (5) in einer Streckblasmaschine, wobei ein als Vorformling ausgebildeter Behälter (5) in eine Blasform (1) eingesetzt und anschließend während des Blasprozesses durch Verfahren einer zumindest einen Fluidauslass (12) aufweisenden Reckstange (9) entlang der Behälterachse innerhalb des Behälters (5) gereckt und der Behälter (5) durch Beaufschlagen mit einem gasförmigen Blasfluid ausgeformt wird,
**dadurch gekennzeichnet, dass**
nach dem Ausformen des Behälters (5) die Innenwandung des Behälters (5) zumindest zum Kühlen eines Kopfbereiches (16) mit einem Spülfluid aus dem zumindest einen Fluidauslass (12) der Reckstange (9) beaufschlagt wird.

2. Verfahren nach Anspruch 1, **dadurch gekennzeichnet, dass** während des Kühlens der zumindest eine Fluidauslass (12) im Kopfbereich (16) angeordnet ist.

3. Verfahren nach Anspruch 2, **dadurch gekennzeichnet, dass** der zumindest eine Fluidauslass (12) in einem Abstand zu einem oberen Ende der Blasform (1) angeordnet ist, wobei der Abstand zwischen 0 und 50 mm beträgt.

4. Verfahren nach Anspruch 2 oder 3, **dadurch gekennzeichnet, dass** die Reckstange (9) vor dem Kühlen ausgehend von einer unteren Endlage in eine Zwischenlage überführt wird.

5. Verfahren nach 4, **dadurch gekennzeichnet, dass** der zumindest eine Fluidauslass (12) in einem unteren Abschnitt der Reckstange (9) angeordnet ist, wobei sich der untere Abschnitt ausgehend von einem unteren Ende der Reckstange (9) über maximal die Hälfte der in der unteren Endlage in dem Behälter (5) angeordneten Länge der Reckstange (9) entspricht.

6. Verfahren nach Anspruch 2 oder 3, **dadurch gekennzeichnet, dass** die Reckstange (9) während dem Kühlen in der unteren Endlage gehalten wird.

7. Verfahren nach 6, **dadurch gekennzeichnet, dass** der zumindest eine Fluidauslass (12) in einem oberen Abschnitt der Reckstange (9) angeordnet ist, wobei sich der obere Abschnitt ausgehend von einem oberen Ende der Blasform (1) über maximal die Hälfte der in der unteren Endlage in dem Behälter (5) angeordneten Länge der Reckstange (9) entspricht.

8. Verfahren nach einem der vorangegangenen Ansprüche, **dadurch gekennzeichnet, dass** zum Ausformen das Blasfluid einen Druck innerhalb des Behälters (5) erzeugt, wobei vor und/oder während des Kühlens der Druck innerhalb des Behälters (5) geringer ist als während des Ausformens.

9. Verfahren nach einem der vorangegangenen Ansprüche, **dadurch gekennzeichnet, dass** das Blasfluid während und/oder nach dem Ausformen gespeichert und das Spülfluid zumindest teilweise aus dem gespeicherten Blasfluid gebildet wird.

10. Verfahren nach einem der vorangegangenen Ansprüche, **dadurch gekennzeichnet, dass** nach dem Kühlen die Reckstange (9) in eine obere Endlage überführt und der ausgeformte Behälter (5) entnommen wird.

11. Streckblasmaschine zur Durchführung des Verfahrens nach einem der vorangegangenen Ansprüche mit zumindest einer Blasform (1) und einer der Blasform (1) zugeordneten Blaseinheit (6) zum Einbringen eines Blasfluids in die Behälter (5), wobei zusätzlich eine innerhalb der Blasform (1) verfahrbare Reckstange (9) zum Recken der Behälter (5) vorgesehen ist, welche zumindest einen über einen Fluidauslass (12) nach außen hin offenen Fluidkanal (11) aufweist.

12. Streckblasmaschine nach Anspruch 11, **dadurch gekennzeichnet, dass** die Reckstange (9) an eine Antriebseinrichtung (10) angeschlossen ist.

13. Streckblasmaschine nach Anspruch 11 oder 12, **dadurch gekennzeichnet, dass** die Reckstange (9) über ein schaltbares Spülfluidventil (13) mit einer Spülfluidversorgung (14) in Wirkverbindung gebracht werden kann, wobei die Spülfluidversorgung (14) bevorzugt an eine Fluidpumpe anschließt.

14. Streckblasmaschine nach einem der Ansprüche 11 bis 13, **dadurch gekennzeichnet, dass** ein Speichertank (17) fluidwirkend an die Reckstange (9) anschließt.

15. Streckblasmaschine nach einem der Ansprüche 11 bis 14, **dadurch gekennzeichnet, dass** der Speichertank (17) über eine Recyclingleitung mit einer Abluftleitung der Blaseinheit (6) fluidwirkend verbunden werden kann.

16. Streckblasmaschine nach Anspruch 11 oder 12, **dadurch gekennzeichnet, dass** der zumindest eine Fluidkanal (11) der Reckstange (9) eine Speichereinheit zur Speicherung eines Spülfluids bildet oder Teil einer Speichereinheit ist, welche ausschließlich über den zumindest einen Fluidauslass (12) nach außen hin offen ist.

17. Streckblasmaschine nach einem der Ansprüche 11 bis 15, **dadurch gekennzeichnet, dass** eine Steuerungsvorrichtung mit der Antriebseinrichtung (10) verbunden und dazu eingerichtet ist, die Reckstange (9) zum Kühlen des Behälters (5) in die Zwischenlage zu überführen.
